# FASCICULE DE BREVET EUROPEEN

(11) **EP 2 625 100 B1**
(45) Date de publication et mention de la délivrance du brevet: **06.01.2016**
(21) Numéro de dépôt: 11779737.3
(22) Date de dépôt: 10.10.2011
(51) Int. Cl.: B64D 11/00, B64D 45/00, B64C 1/14, E06B 3/90

(54) **SAS D'ACCÈS SÉCURISÉ AU COCKPIT D'UN AÉRONEF ET AÉRONEF ÉQUIPÉ D'UN TEL SAS D'ACCÈS.**
SICHERHEITS-LUFTSCHLEUSE FÜR DAS COCKPIT EINES FLUGZEUGES UND FLUGZEUG MIT EINER DERARTIGEN LUFTSCHLEUSE
SECURE AIRLOCK FOR THE COCKPIT OF AN AIRCRAFT, AND AIRCRAFT HAVING SUCH AN AIRLOCK

(30) Priorité: 08.10.2010 FR 1058197
(43) Date de publication de la demande: 14.08.2013
(73) Titulaire: Airbus Operations, 31060 Toulouse (FR)
(72) Inventeur: GUERING, Bernard, F-31850 Montrabe (FR)
(74) Mandataire: Santarelli
(86) Numéro de dépôt international: PCT/FR2011/000548
(87) Numéro de publication internationale: WO 2012/045931

(56) Documents cités:
- EP-A1- 0 383 709
- WO-A1-2006/015457
- NL-C2- 1 019 944
- US-A1- 2006 032 977

## Description

La présente invention concerne un sas d'accès sécurisé au cockpit d'un aéronef. Un tel sas d'accès est connu de US 2006/032977, qui est considéré comme l'art antérieur le plus proche et décrit les caractéristiques du préambule de la revendication 1.

Elle concerne aussi un aéronef équipé d'un tel sas d'accès.

Dans l'état de la technique, il est connu d'utiliser une porte blindée qui commande le passage du cockpit à la cabine d'un avion de ligne de façon à protéger l'équipage d'actes de malveillance de la part d'un passager. Cependant, un tel système ne permet pas d'éviter l'intrusion de personnes malveillantes dans le cockpit lorsqu'un membre d'équipage en sort.

Il serait utile, de façon générale, de pouvoir augmenter la sécurité dans le cockpit ou, plus généralement, lorsque l'on veut passer d'un premier local à au moins un deuxième local d'aéronef. Il serait également utile de disposer d'une solution d'accès sécurisé d'un premier local à au moins un deuxième local d'aéronef qui soit relativement compacte et n'empiète pas de façon exagérée sur l'espace disponible dans l'un des locaux.

L'invention a pour objet un sas d'accès sécurisé permettant la communication entre plusieurs locaux d'un aéronef, le sas d'accès sécurisé étant installé dans une zone de l'aéronef située entre un premier local et au moins un deuxième local, caractérisé en ce qu'il comporte deux cloisons mobiles (30, 31) en forme de portions de cylindres concentriques, chacune des cloisons étant susceptible d'être déplacée, indépendamment l'une de l'autre, autour d'un axe commun (41), de manière à ménager entre elles une seule ouverture (24, 36) qui, selon la position relative des cloisons, permet l'accès à l'un ou l'autre des locaux, les deux cloisons étant aptes à se déplacer sur deux cylindres concentriques de diamètres différents.

Grâce à un simple déplacement des cloisons l'une par rapport à l'autre une ouverture d'accès à un local est créée.

L'agencement concentrique des cloisons confère un encombrement réduit au sas et le déplacement relatif des cloisons a lieu dans le volume défini par cet agencement concentrique. Ainsi, l'utilisation du sas de sécurité pour permettre à une personne de se déplacer d'un premier local à un deuxième local n'empiète pas, ou peu, sur l'espace disponible dans le deuxième local.

Par ailleurs, dans la mesure où les cloisons pivotent sur elles-mêmes et qu'il n'y a plus de porte à ouvrir sur l'espace interne au deuxième local, les risques qu'une personne malveillante se dissimule à proximité de la porte lorsqu'elle est fermée, et derrière celle-ci lorsqu'elle est ouverte, sont éliminés ou en tout cas fortement réduits.

Le déplacement des cloisons est par exemple un mouvement de rotation autour de l'axe commun. Les portions cylindriques sont agencées de façon concentrique autour de cet axe.

On notera que plus de deux locaux peuvent être distribués par le sas et être ainsi mis en communication deux à deux.

Le sas est par exemple agencé dans une paroi séparant deux locaux l'un de l'autre ou au sein d'un assemblage de plusieurs parois séparant plus de deux locaux (2, 3, 4 ...) les uns des autres.

Selon un autre aspect, l'invention concerne un sas d'accès sécurisé permettant la communication entre plusieurs locaux d'un aéronef, le sas étant installé dans une zone de l'aéronef située entre un premier local et au moins un deuxième local, caractérisé en ce qu'il comporte au moins une cloison mobile en rotation autour d'un axe de rotation et ayant une forme de portion cylindrique qui définit, d'une part, un espace intérieur au sas et, d'autre part, une ouverture entre l'intérieur et l'extérieur du sas, la rotation de ladite au moins une cloison permettant un accès d'un premier local à un deuxième local.

La portion de cylindre s'étend, dans un plan radial (perpendiculaire à l'axe du cylindre), sur plus de 180° afin d'obturer la zone (ex : paroi) entre les deux locaux et où est installé le sas.

On notera que le mouvement de rotation est décomposé pour que l'ouverture de passage du sas soit d'abord positionnée en vis-à-vis du premier local. Ensuite, lorsqu'un occupant a pénétré dans le sas, le mouvement de rotation peut reprendre (à condition que l'espace situé dans le deuxième local soit libre d'accès, c'est-à-dire sécurisé ; ceci peut être vérifié grâce à un système de vidéo surveillance composé d'une ou de plusieurs caméras visualisant le deuxième local et d'un écran de contrôle placé dans le sas et/ou dans le premier local) et la cloison tourne sur elle-même pour placer l'ouverture en vis-à-vis du deuxième local.

Par exemple, la présente invention concerne un sas d'accès sécurisé au cockpit d'un aéronef et qui est installé dans une paroi de séparation entre le cockpit et la cabine de l'aéronef.

On conserve ainsi l'espace en cabine réservé aux sièges des passagers et on utilise une partie de l'espace du cockpit qui doit, dans l'état de la technique, rester disponible pour le franchissement de la porte habituelle.

Le sas sécurise l'accès au cockpit et également l'accès du cockpit à la cabine.

Le sas permet par exemple l'accès entre le cockpit et la cabine ou entre le cockpit et une salle de repos ou des toilettes ou bien entre plusieurs de ces locaux (par exemple entre une salle de repos et la cabine).

Selon d'autres aspects de l'invention pris isolément ou en combinaison :
- les cloisons sont aptes à effectuer une course de déplacement qui s'étend sur 360 ; un avantage de cette disposition est de simplifier la construction et le montage du sas qui ne comprend que deux parois mobiles sans nécessiter l'installation de paroi(s) fixe(s) supplémentaire(s) pour séparer les deux locaux. Un autre avantage de cette disposition est de pouvoir régler l'orientation angulaire de l'ouverture du sas permettant l'accès à l'un des locaux sur 180°, du côté du premier local comme du côté du second local. Cette possibilité de réglage ou d'ajustement de l'orientation angulaire de l'ouverture est par exemple utile dans le cas où un trolley ou chariot se trouverait dans l'allée centrale de la cabine en vis-à-vis du sas et gênerait une sortie du sas dans la direction de l'allée centrale ;
- les portions de cylindres s'étendent chacune sur un secteur angulaire de plus de 180°; un avantage de cette disposition est d'obturer la zone entre les deux locaux où est installé le sas ;
- le sas comprend une double paroi fermant l'accès au premier local ou au second local selon la position des cloisons mobiles par rapport aux locaux; un avantage de cette disposition est de sécuriser davantage l'accès à l'un et/ou à l'autre des locaux (ex : au cockpit ou à la cabine) ;

- les cloisons mobiles sont entièrement manipulables par un utilisateur ; un avantage de cette disposition est qu'il n'est pas nécessaire de motoriser le sas, offrant ainsi un gain en terme de masse embarquée ; de plus, le fonctionnement du sas est ainsi particulièrement aisé.
- les cloisons mobiles sont reliées à des moyens de support autorisant des mouvements de rotation indépendants de chaque cloison autour de l'axe commun.
- les moyens de support des cloisons mobiles comportent au moins une embase ou couronne cylindrique qui est susceptible de tourner autour de l'axe commun du sas, relativement à un plancher, ou à une voûte de l'aéronef ; un avantage de cette disposition est de permettre de dégager la zone centrale du sas, par exemple sur le plancher, et de ne pas ajouter le poids de l'occupant à celui de la partie mobile du sas (couronne). Dans la zone centrale du sas l'occupant repose sur un plancher fixe et donc son poids n'est pas supporté par le sas. La réalisation du sas est ainsi simplifiée. Par ailleurs, un tel agencement permet à l'occupant du sas de guider en rotation de façon tout à fait intuitive les cloisons du sas. Si, au contraire, l'occupant était dans un sas monté sur un pivot, il serait incapable de faire tourner le sas car, une fois le sas fermé, il ne disposerait d'aucun référentiel fixe. Le sas devrait alors être motorisé. Dans une forme de réalisation possible, le sas comprend deux embases ou couronnes tournantes disposées aux deux extrémités opposées du sas (extrémités haute et basse). Ces embases ou couronnes sont guidées par des moyens de guidage (ex : galets) à roulement qui assurent le guidage circulaire et la portance du sas. L'embase ou couronne inférieure entoure une zone centrale qui est formée par le plancher d'origine de l'aéronef.
- la dite au moins une couronne cylindrique est mobile en rotation par rapport au plancher et/ou à la voûte par l'intermédiaire de galets de guidage et/ou de portance fixés au plancher ou à la voûte ; un avantage de cette disposition est de faciliter le montage et le démontage du sas qui peut donc s'adapter facilement à un environnement d'aéronef conventionnel. En effet, une fois le sas démonté on retrouve un environnement d'aéronef conventionnel sans plancher spécifique et une porte conventionnelle peut alors être installée sur la cloison séparant le cockpit de la cabine en lieu et place du sas ;
- l'une des cloisons mobiles est susceptible de se déplacer par rapport à ladite au moins une couronne cylindrique par l'intermédiaire de moyens de guidage solidaires de la dite couronne ; un avantage de cette disposition est de permettre de réaliser le mouvement de rotation relatif de l'une des cloisons par rapport à l'autre cloison ;
- le sas comporte une première et une seconde cloisons mobiles qui coopèrent avec des moyens de verrouillage de leurs mouvements de rotation, autour de l'axe commun, les moyens de verrouillage étant activés par des moyens de commande assurant qu'une seule cloison est rendue mobile tant que l'ouverture d'accès à l'un des locaux n'est pas complètement dégagée ; un avantage de cette disposition est d'empêcher qu'un individu puisse traverser le sas sans que celui-ci ne passe par un état complètement fermé ;
- l'une des cloisons mobiles est munie d'une articulation permettant de fixer au sas de manière articulée une plaque et de déployer cette plaque hors du sas ou de la rabattre vers le sas; un avantage de cette disposition est de récupérer une partie du volume occupé par le sas d'accès ; l'articulation est par exemple disposée sur le bord de la portion cylindrique de l'une des cloisons mobiles qui est par exemple une cloison dite interne ;
- la plaque est une plaque de support qui comprend une assise permettant à un membre de l'équipage présent dans un local (ex : cockpit) ou dans un autre local (ex : cabine de passagers) de s'asseoir ; on ajoute ainsi une capacité supplémentaire d'asseoir un membre d'équipage dans l'un des locaux ;
- l'assise est solidaire de la plaque de support par l'intermédiaire de rails et/ou d'articulations permettant son réglage en hauteur et/ou son inclinaison par rapport à la verticale ; un avantage de cette disposition est de permettre d'utiliser le sas comme un logement permettant la relaxation d'un membre d'équipage tant du côté d'un local (ex : cockpit) que du côté d'un autre local (ex : cabine de passagers) ;
- au moins l'une des cloisons mobiles est dotée d'éléments d'appuis répartis suivant la hauteur de la cloison de façon à permettre l'accès à une trappe d'évacuation dans la partie supérieure du sas (ex : voûte du cockpit) ; un avantage de cette disposition est de permettre d'évacuer un local (ex : cockpit) ou d'y transférer une équipe d'intervention, notamment au sol, sans avoir besoin de passer par un autre local tel que la cabine des passagers ;
- au moins l'une des cloisons mobiles est munie d'un organe de préhension, par exemple, une couronne de préhension, qui permet d'effectuer la rotation de ladite cloison depuis l'espace fermé interne du sas et qui est formé par les deux cloisons ; un avantage de cette disposition est de permettre de manoeuvrer manuellement le sas depuis l'espace intérieur du sas.

Selon encore d'autres caractéristiques possibles prises isolément ou en combinaison :
- la première cloison mobile est fixée à la couronne cylindrique des moyens de support par des moyens de fixation répartis à la périphérie de la première cloison mobile et de la couronne cylindrique,
- la seconde cloison mobile repose sur la couronne cylindrique par des moyens de guidage qui assurent son mouvement de rotation ;
- des galets de guidage du mouvement de la rotation de la couronne cylindrique sont en contact avec une paroi intérieure et/ou extérieure de la couronne cylindrique et qui est parallèle à l'axe de rotation du sas ;
- des galets de portance de la couronne cylindrique sont en contact avec une partie de la couronne cylindrique qui est disposée dans un plan normal à l'axe de rotation commun du sas ;
- les moyens de guidage de la seconde cloison mobile qui sont solidaires de la dite au moins une couronne cylindrique comportent une pluralité de galets d'axes parallèles à l'axe de rotation commun ;
- la pluralité de galets sont solidaires de la partie de la couronne cylindrique disposée dans un plan normal à l'axe de rotation commun du sas et disposés de part et d'autre de l'épaisseur de ladite seconde cloison mobile sur au moins une partie de sa périphérie ;
- les moyens de guidage de la seconde cloison mobile comportent une pluralité de galets d'axes radiaux relativement à l'axe de rotation commun du sas et sont montés sur une pièce supportant la seconde cloison, permettant ainsi de faire rouler la cloison par l'intermédiaire de ladite pièce sur la couronne cylindrique ;
- la couronne cylindrique comporte une piste creuse aménagée sur la partie de la couronne cylindrique disposée dans un plan normal à l'axe de rotation du sas, en vis-à-vis de la pièce supportant la seconde cloison mobile pour recevoir le roulement des galets.

L'invention concerne également un aéronef qui incorpore au moins un sas d'accès sécurisé selon l'invention.

D'autres caractéristiques et avantages de la présente invention seront mieux compris à l'aide de la description et des dessins annexés parmi lesquels :
- la figure 1 représente le mode d'accès au cockpit d'un avion de ligne selon l'état de la technique ;
- la figure 2 représente une possibilité de disposition d'accès en utilisant un sas connu de l'état de la technique ;
- la figure 3 représente un schéma de dessus d'un sas selon un mode de réalisation de la présente invention ;
- la figure 4 représente un schéma de principe du sas de la figure 3 ;
- les figures 5a à 5e représentent des positions successives du sas de la figure 4 ;
- la figure 6 représente une vue en perspective depuis l'espace de la cabine des passagers du sas de la figure 3 ;
- la figure 7 représente une première utilisation d'un sas de la figure 4 équipé d'un strapontin supplémentaire ;
- les figures 8 et 9 représentent une seconde utilisation du sas de la figure 4 ;
- la figure 10 est une représentation en perspective d'un autre mode de réalisation du sas selon l'invention qui est utilisé comme issue de secours pour le cockpit ;
- les figures 11 à 15 sont des schémas de modes de réalisation de parties du sas des figures précédentes.

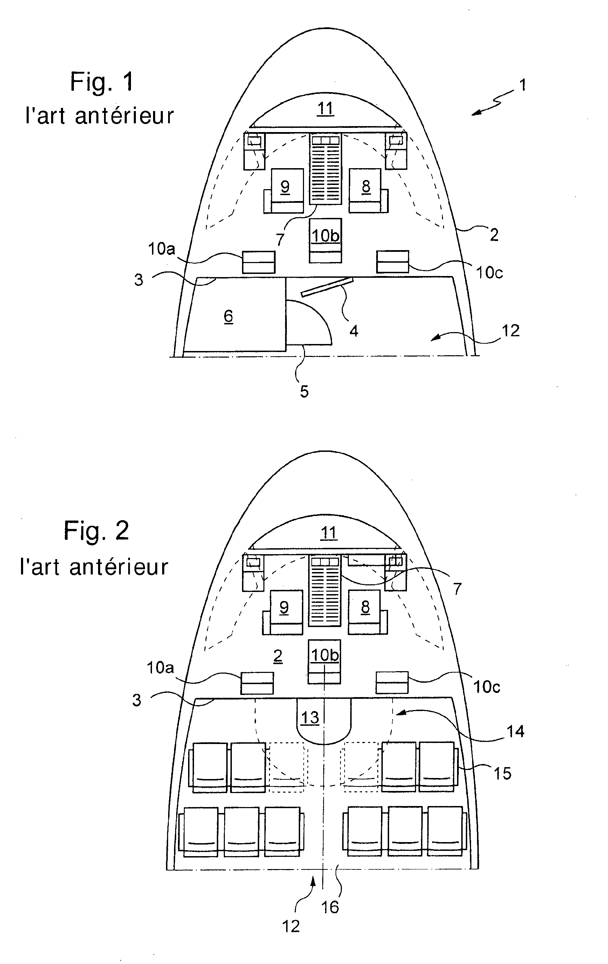

A la figure 1, on a représenté une vue de dessus d'un aéronef tel qu'un avion de ligne 1 comportant un cockpit 2 et une cabine de passagers 12. Le cockpit et la cabine de passagers sont séparés par une paroi blindée 3 au centre de laquelle est disposée une porte blindée 4. La porte blindée permet à l'équipage de passer du cockpit 2 à la cabine 12 et inversement et, le cas échéant, de verrouiller la porte de façon à protéger l'accès.

Le cockpit 2 comporte une planche de bord avec des instruments de navigation 11 disposés au-dessous d'une verrière et deux sièges de pilotage 8 et 9 séparés par une console de pilotage 7. Des sièges 10a, 10b et un strapontin 10c sont par ailleurs disposés dans le cockpit.

On remarque que dans cette disposition l'ouverture de la porte 4 se fait sur le couloir central de la cabine. Cependant, l'ouverture de la porte 4 nécessite de dégager au moins une rangée de sièges passagers. Il est aussi connu de disposer de toilettes 6 munies d'une porte 5.

Lorsqu'un membre de l'équipage veut sortir du cockpit, il peut obtenir l'image de l'entrée de la cabine 12 à l'aide d'une caméra vidéo de surveillance et d'un écran panoramique de contrôle disposé dans le cockpit. Toutefois, un problème de cet état de la technique réside dans le fait que le membre d'équipage est incapable de résister à une agression soudaine d'un passager placé initialement à proximité de la porte 4. Une fois que l'agression a eu lieu, la porte blindée 4 est ouverte et l'accès au cockpit 2 est libre.

Il est connu d'utiliser des sas contrôlant l'accès à une aire protégée, par exemple au sol, pour protéger des établissements bancaires. Dans ces dispositions, un sas de sécurité blindé est disposé autour de l'ouverture d'accès. Il est alors possible de contrôler à l'intérieur du sas le droit d'accès ou une condition de sécurité de l'entrant avant de valider l'ouverture.

A la figure 2, on a représenté une étude d'implantation d'un tel sas dans un avion de ligne classique. Le cockpit 2 est identique à celui de la figure 1 et porte les mêmes numéros de référence qui ne seront pas plus décrits. La cabine 12 est munie d'une allée centrale 16 et de deux rangées de sièges comme les sièges 15. Un sas 13 est disposé suivant l'axe central, dans le prolongement du couloir central 16. Toutefois, on remarque qu'il faut disposer d'un périmètre d'accès 14 au sas prélevant de l'espace sur les sièges de la première rangée qui sont les plus proches du couloir central. Or, le retrait de tels sièges réduit la rentabilité d'exploitation d'un tel avion de ligne.

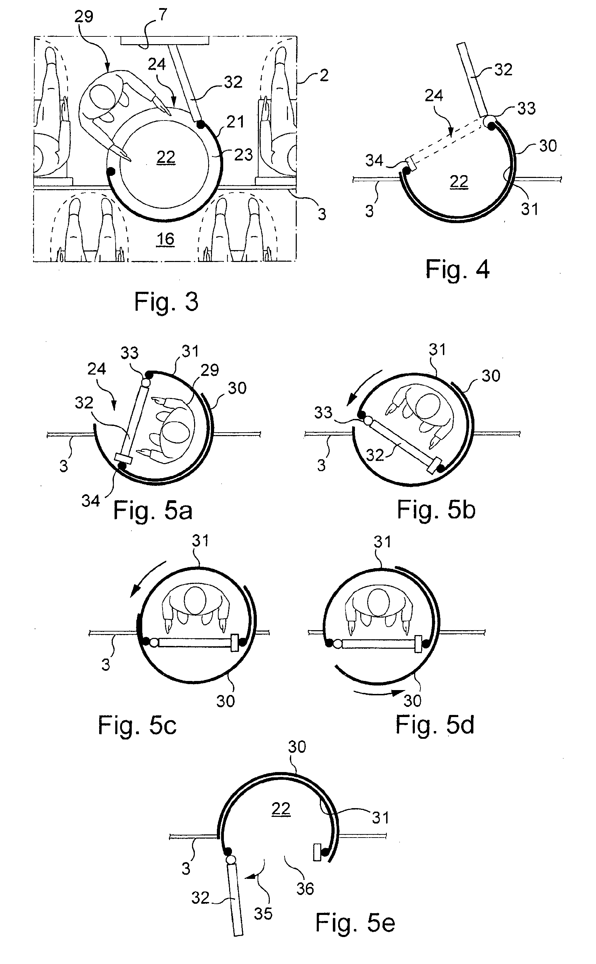

A la figure 3, on a représenté une vue de dessus dans laquelle le principe du sas d'accès sécurisé de l'invention est représenté. Dans l'ouverture, par exemple centrale, pratiquée dans la paroi blindée 3 de séparation entre l'espace du cockpit 2 et l'espace de la cabine des passagers 12 est disposé un sas de forme générale cylindrique. Le sas est composé principalement d'une couronne mobile 23 portant au moins une cloison mobile 21. La cloison mobile 21 est une portion de cylindre vertical, d'axe de cylindre confondu avec l'axe vertical de la couronne cylindrique 23. Un espace central 22 est défini à l'intérieur du sas de rotation notamment par la cloison 21 et reste fixe en permanence pendant les mouvements de rotation du sas et de sa couronne 23 autour de l'axe vertical précité. Une ouverture 24 est créée par la suppression de la portion de cylindre complétant la portion cylindrique de cloison mobile 21 pour former un cylindre complet. Par cette ouverture 24, un membre d'équipage 29 peut accéder depuis le cockpit à l'espace central 22 du sas d'accès sécurisé de l'invention. On notera que la portion de cylindre s'étend, dans un plan radial, sur un secteur angulaire supérieur à 180° afin d'obturer complètement le passage de la paroi dans lequel est installé le sas.

Lorsque le membre d'équipage 29 veut accéder à la cabine des passagers 12 depuis le cockpit 2, il manipule le sas sans avoir recours à une quelconque motorisation de façon à disposer l'ouverture 24 du côté du cockpit. Puis, il pénètre à l'intérieur du sas dans l'espace central 22. Ensuite, il observe sur un écran panoramique de contrôle de la cabine des passagers si le couloir central 16 est libre. Une fois cette vérification faite, il fait pivoter manuellement le sas autour de son axe commun vertical en faisant tourner la cloison mobile 21 sur la couronne cylindrique mobile 23.

A la figure 4, on a représenté un schéma expliquant le fonctionnement précité. Dans ce mode de réalisation de la figure 4, le sas d'accès sécurisé comporte deux cloisons mobiles concentriques : une cloison externe 30 et une cloison interne 31 qui sont solidaires et /ou mobiles par rapport à la couronne cylindrique. Les cloisons mobiles 30 et 31 sont disposées à la place de la cloison mobile 21 illustrée à la figure 3. Les deux cloisons, dans cet exemple, s'étendent suivant un secteur angulaire identique et supérieur à 180° pour les mêmes raisons que celles évoquées précédemment.

Ces cloisons sont disposées et se déplacent sur deux cylindres concentriques (en projection en vue de dessus il s'agit de deux cercles), de diamètres différents.

La course de déplacement des cloisons sur ces cylindres n'est pas limitée et peut s'effectuer sur 360° afin de conférer une flexibilité maximale à la manipulation du sas, et notamment à la position de l'ouverture (orientation angulaire de l'ouverture).

On remarquera à cet effet qu'aucune autre cloison, par exemple fixe, n'est nécessaire pour constituer le sas.

Dans un mode particulier de réalisation, la cloison mobile interne 31 porte une plaque 32 montée sur une articulation 33. Cette plaque, ainsi qu'il sera explicité plus loin, permet de récupérer le volume utilisé par le sas. La plaque 32 est articulable entre une position déployée en dehors du sas pour permettre l'entrée dans le sas ou la sortie de celui-ci (position en traits pleins sur la Figure 4) et une position rabattue (position en traits pointillés sur la Figure 4) fermant l'accès au sas. La plaque 32 constitue une plaque de support qui peut, par exemple, porter un strapontin de manière à ce que, quand la plaque de support 32 est pivotée jusque dans la position indiquée par des traits pointillés à la figure 4, un membre d'équipage puisse s'asseoir sur le strapontin. Dans cette position la plaque 32 est verrouillée sur la cloison 31 par des moyens de verrouillage 34 connus en soi.

Le strapontin et sa plaque de support peuvent être escamotés (c'est-à-dire placés dans une position de dégagement de l'ouverture 24) lorsqu'un membre de l'équipage veut accéder à l'espace central 22 du sas d'accès sécurisé. On notera que le strapontin est optionnel.

Les figures 5a à 5e, représentent cinq états successifs des cloisons mobiles 30, 31 lorsque le sas d'accès sécurisé est manipulé par un occupant. Avant la situation représentée à la figure 5a, l'occupant 29 a préalablement escamoté la plaque de support 20 sur le bord extérieur de la cloison mobile interne 31 du sas (comme sur la figure 4). Il a ensuite pénétré via l'ouverture 24 à l'intérieur de l'espace central 22 du sas et a refermé, sur son verrou 34, la plaque de support de strapontin 20. Saisissant la partie supérieure de la plaque 20, l'utilisateur 29 fait alors entrer en rotation la seule cloison mobile interne 31 autour de l'axe central commun du sas, ainsi qu'on le voit selon à la figure 5b.

Lorsque la plaque de support de strapontin 20 est sensiblement parallèle à la paroi blindée 3 (Figure 5c), des moyens de commande non représentés actionnent des verrous (également non représentés) de sorte que la cloison mobile externe 30 est déverrouillée, tandis que la cloison mobile interne 31 est verrouillée afin d'empêcher son mouvement de rotation (Figure 5d).

L'occupant 29 à l'intérieur du sas provoque ensuite la rotation de la cloison mobile externe 30 de façon à dégager l'ouverture 36 du côté de la cabine des passagers. Lorsque cette ouverture 36 est entièrement dégagée (Figure 5e), la cloison mobile externe 30 est à nouveau verrouillée. L'utilisateur peut alors déverrouiller la plaque de support mobile 20 et la faire pivoter autour de son articulation, comme indiqué par la flèche 35, de façon à dégager le passage de l'ouverture 36. L'occupant peut alors passer de l'intérieur 22 du sas à la cabine de passagers.

On remarquera qu'à la Figure 5e (et inversement à la Figure 4), les deux cloisons 30, 31 étant disposées en vue de dessus sur des cercles concentriques de diamètres différents, l'accès à l'une ou à l'autre des deux zones de l'aéronef peut être fermé par les deux cloisons (double paroi), conférant au sas une sécurité supplémentaire.

Bien entendu, le mouvement inverse où un membre d'équipage veut passer de la cabine de passagers vers le cockpit s'effectue de façon identique, dans l'ordre inverse des étapes précitées et ne sera pas décrit plus avant.

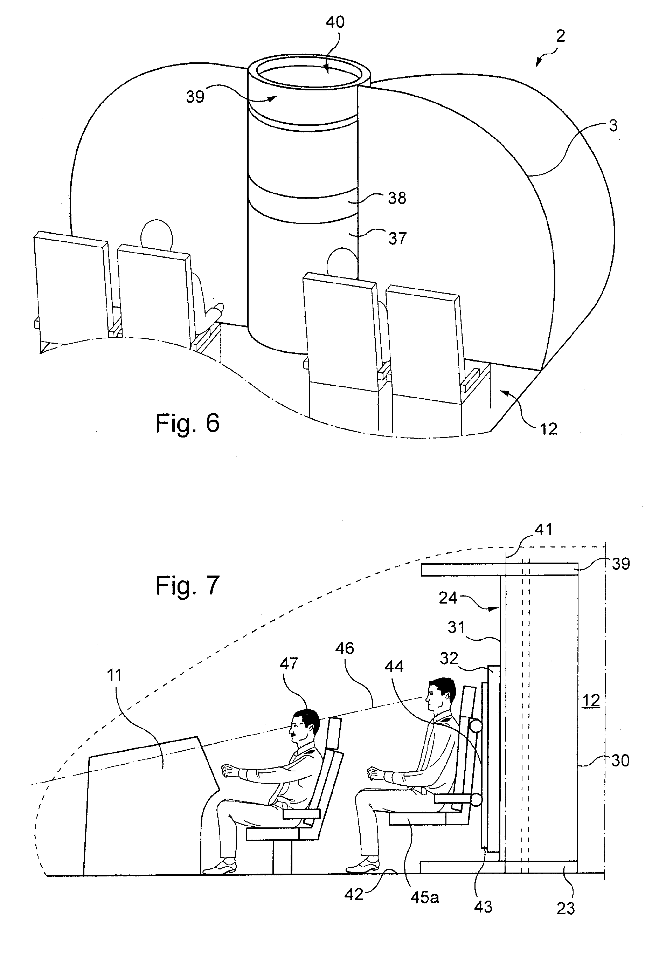

A la figure 6, on a représenté une vue en perspective schématique de l'intérieur d'un avion de ligne équipé d'un sas de sécurité selon l'invention. Le sas de sécurité est alors dans la position permettant à un membre d'équipage présent dans le cockpit 2 de pénétrer à l'intérieur du sas. Le sas présente, du côté de la cabine des passagers 12, une cloison ayant une forme générale en portion de cylindre 37 qui est disposée de façon parfaitement jointive avec la paroi blindée 3 de séparation entre le cockpit et la cabine des passagers 12.

La cloison mobile externe 37, et une cloison mobile interne non visible à la figure 6, sont montées sur une couronne cylindrique supérieure 39 disposée du côté de la voûte (plafond) de la cabine d'aréonef. Ainsi qu'il sera expliqué plus loin, la couronne cylindrique supérieure de voûte 39 coopère avec une trappe 40 permettant une évacuation depuis l'intérieur 22 du sas (voir figure 4) vers l'extérieur du sas par le haut de la voûte.

Une saillie annulaire 38, agencée sensiblement à la hauteur des épaules d'un occupant du sas, protège une couronne interne (non visible sur la Figure 6) de préhension de la cloison externe 37.

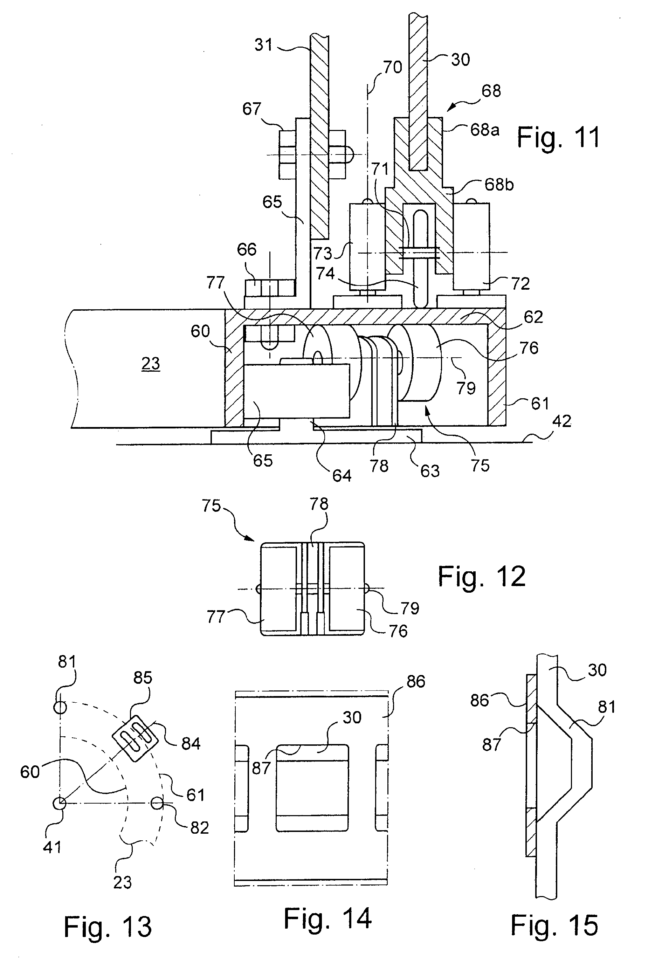

Cette couronne de préhension fixée à la cloison 37 permet à l'occupant du sas de déplacer en rotation la cloison 37 après que le verrou de cette cloison ait été déverrouillé. Un détail de la couronne interne est illustré aux figures 14 et 15.

On notera que dans cette configuration les sièges passagers de la première rangée, notamment ceux disposés le long du couloir central de la cabine, sont encore utilisables lorsque l'on dispose le sas de l'invention dans l'ouverture centrale de la paroi blindée 3.

A la figure 7, on a représenté une première utilisation du sas d'accès sécurisé selon l'invention dans lequel un strapontin 45a a été fixé de manière convenable sur la plaque de support 32. La plaque de support 32 a été représentée montée sur l'un des bords libres de la cloison cylindrique interne 31 et verrouillée sur le bord libre opposé de la cloison 31 par un système de verrouillage. Le strapontin 45a est ici accessible pour un membre de l'équipage du cockpit 2.

On dispose ainsi de trois sièges dans la partie arrière du cockpit, à savoir les strapontins 45b et 45c de part et d'autre du sas et le strapontin 45a sur le sas proprement dit.

Sur la figure 7 le sas d'accès sécurisé de l'invention comporte la couronne circulaire inférieure 23 centrée autour d'un axe qui est l'axe de rotation commun 41 du sas et qui est montée sur le plancher 42. Le sas comporte également une couronne circulaire supérieure 39 de même axe 41 et qui est fixée à la voûte. La cloison cylindrique externe 30 est en position verrouillée du côté de la cabine des passagers 12, tandis que l'ouverture 24 ménagée entre la cloison 30 et la cloison interne 31 est fermée par la plaque de support 32. Le strapontin 45a est monté sur un rail vertical 43 solidaire de la plaque de support 32. Des chariots de liaison 44 entre le strapontin et le rail 43 permettent de régler en hauteur le strapontin 45a.

Du fait de la position centrale du sas d'accès sécurisé, l'occupant du strapontin 45a peut déplacer celui-ci vers le haut par coulissement sur le rail 43, de façon à disposer de la même ligne de vue 46 que les pilotes (comme le pilote 47) à travers la verrière, au dessus du poste de navigation 11. Il peut alors faire bénéficier les pilotes d'observations qu'il fait en même temps qu'eux.

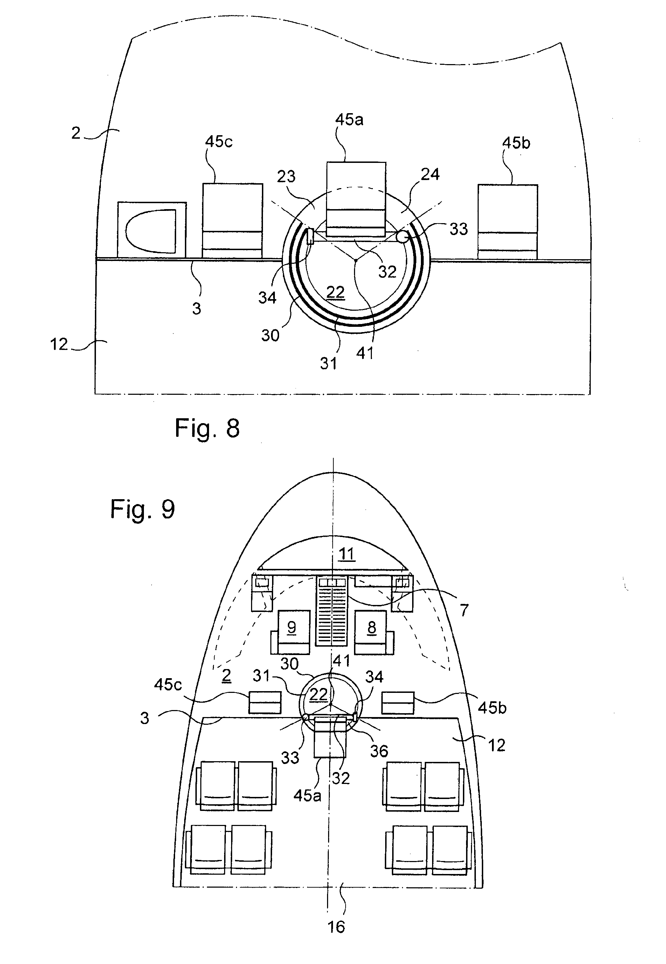

A la figure 8, on a représenté le sas d'accès sécurisé en vue de dessus avec son ouverture 24 orientée du côté du cockpit 2. Le strapontin 45a est en position ouverte contre la plaque de support 32 qui est assujettie à la cloison mobile interne 31. Dans un mode particulier de réalisation, lorsque le sas est verrouillé dans la position de la Figure 8 du côté du cockpit 2, l'ouverture 24 du sas est fermée ou isolée du cockpit par un rideau non représenté. L'occupant du strapontin 45a peut alors régler par rapport à la verticale l'inclinaison de la plaque de support 32 dans le sas et/ou du strapontin 45a pour passer dans une position allongée ou semi-allongée, dite de relaxation. On dispose ainsi dans le cockpit 2 qui est agrandi par le sas d'une sorte de chambre d'isolement pour le repos. On notera que la plaque de support fixée à la cloison interne peut être disposée davantage à l'intérieur du sas de façon à laisser plus d'espace interne utilisable pour l'occupant du strapontin. Ce dernier peut alors se retrouver davantage masqué par le rideau fermant l'ouverture 24.

La Figure 9 représente les mêmes éléments que ceux des Figures 7 et 8. Toutefois, le sas a été déplacé par un mouvement de rotation relatif entre les cloisons 30 et 31 de façon à ménager entre celles-ci une ouverture 36 communiquant avec la cabine des passagers 12. Le strapontin 45a peut alors être utilisé, par exemple lors d'une phase d'atterrissage ou de décollage, par une hôtesse qui se trouve assise dans le couloir central 16.

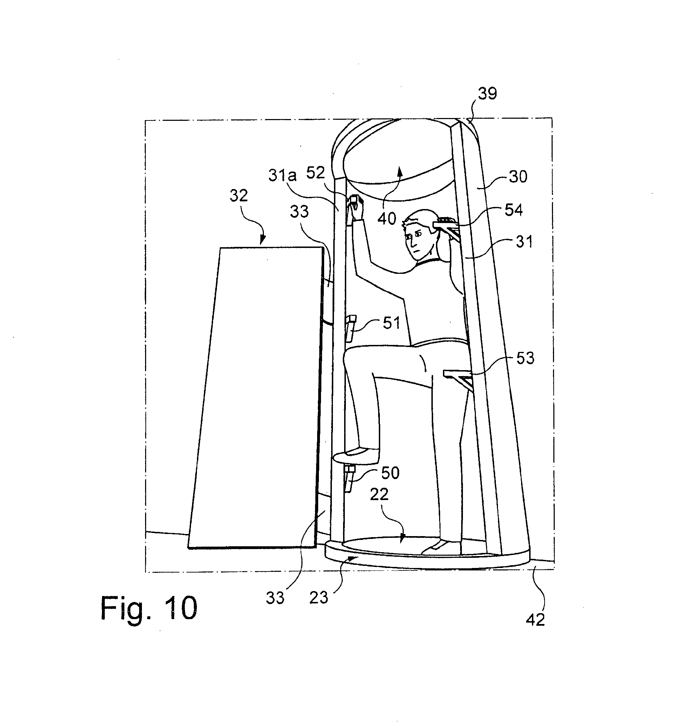

A la figure 10 on a représenté un mode particulier de réalisation du sas d'accès sécurisé de l'invention. Le sas est vu en position d'ouverture du côté du cockpit.

La plaque de support 32 montée de façon articulée sur un bord libre 31 a de la cloison mobile interne 31 (via la ou les articulations 33) a été représentée en position ouverte à l'extérieur du sas. L'occupant placé dans l'espace central 22 dispose d'éléments d'appui tels que des marches, par exemple escamotables, comme les marches 50-54 disposées sur les deux bords libres de chaque côté de l'ouverture 24. Ces marches ou éléments d'appui permettent de monter et d'accéder à la trappe 40 aménagée dans la voûte afin de s'échapper du cockpit. Ces éléments d'appui sont répartis sur la quasi totalité de la hauteur de la cloison 31. Cette disposition assure une possibilité d'évacuation de l'équipage, notamment au sol, lorsque la cabine des passagers n'est plus accessible pour des raisons de sécurité ou autres.

Chaque marche 50-54 est par exemple montée sur une articulation qui permet sa rétractation à l'intérieur de la cloison mobile interne 31, de façon à éviter d'encombrer le passage dans l'ouverture de cette cloison.

On notera que les marches ou autres éléments d'appui jouant le même rôle peuvent être agencés en quinconce et positionnés à d'autres endroits de la face intérieure de la cloison interne 31.

On notera qu'à la Figure 10, l'espace central 22 du sas d'accès sécurisé n'est pas solidaire de la couronne cylindrique inférieure 23 mais, au contraire, est solidaire du plancher 42. Cette disposition permet de ne pas faire supporter le poids de l'occupant du sas par la partie mobile du sas mais par le plancher lui-même. En outre, cette disposition permet l'adaptation du sas à un environnement classique d'aéronef et permet un montage ou un démontage du sas économique et simple.

A la figure 11, on a représenté suivant une vue partielle en coupe radiale par rapport à l'axe commun du sas un mode particulier de réalisation de la liaison entre la couronne circulaire ou cylindrique inférieure 23 et la partie inférieure des cloisons 30, 31 mobiles en rotation.

La couronne 23 a une forme présentant une symétrie de révolution autour de l'axe de rotation commun 41 et a une section dans un plan radial qui a une forme de U inversé.

La cloison mobile interne 31 est solidaire d'une partie horizontale 62 (paroi de fond du U inversé) de la couronne 23 par l'intermédiaire d'équerres angulairement réparties en périphérie de la cloison, comme l'équerre 65. L'équerre 65 est solidaire de la partie horizontale 62 de la couronne 23 par l'intermédiaire d'un écrou 66 fixé à une de ses extrémités. Un écrou 67 permet de solidariser l'autre extrémité de l'équerre 65 avec le bas de la cloison mobile interne 31.

Une pièce 68, par exemple en matériau métallique, de forme générale cylindrique présente deux parties 68a, 68b disposées dos à dos, ayant chacune en section radiale une forme de U qui définit un logement orienté en sens opposé de l'autre logement. Le logement de la partie supérieure 68a en forme de U sert à recevoir le bord inférieur de la cloison mobile externe 30. Le logement de la partie inférieure est en forme de U inversé et reçoit une série de galets comme le galet 74 d'axe radial horizontal 71 et qui est fixé entre les bras descendants verticaux de la partie 68b. Les galets permettent de faire rouler l'ensemble cloison 30 et pièce de support 68 sur la partie horizontale 62 de la couronne cylindrique 23 dans une piste creuse aménagée à la surface de celle-ci. Par ailleurs, les bras verticaux de la partie 68b sont enserrés par des galets 72, 73 d'axe vertical 70 et qui sont solidaires de la même parties horizontale 62 de la couronne cylindrique 23.

Pour assurer la rotation de la couronne cylindrique 23 autour de l'axe commun 41 du sas qui constitue un axe de rotation pour les deux cloisons interne 31 et externe 30, la couronne cylindrique 23 est montée à très faible distance au dessus du plancher 42. La couronne 23 peut tourner autour de cet axe commun grâce à des galets de guidage comme le galet 65 fixé par un axe 64 sur un socle 63 solidaire du plancher 42. Le galet de guidage 65 est en contact avec une paroi cylindrique intérieure 60 du profilé en U inversé de la couronne cylindrique 23.

Le galet de guidage 65 peut alternativement être disposé à l'intérieur du U inversé le long de la paroi extérieure 61 de la couronne cylindrique 23. Les parois verticales intérieure 60 et extérieure 61 forment en section radiale les bras du profilé en U inversé.

De plus, la couronne cylindrique est supportée verticalement par une paire 75 de galets de portance qui comporte deux galets 76 et 77 montés sur un support commun 78 par l'intermédiaire d'un axe horizontal. Le support commun des galets 76 et 77 est solidaire du plancher de la cabine.

La même disposition peut être en tout ou partie mise en oeuvre sur la couronne supérieure 39 (Figures 7 et 10), en plus ou à la place de la disposition sur la couronne 23.

La Figure 12 représente une vue de dessus de la paire de galets de portance 76, 77 de la figure 11 montés tous deux libres en rotation autour de l'axe radial 79 traversant le support 78 de part en part. L'axe radial 79 est dirigé sur l'axe commun 41.

A la figure 13, on a représenté un schéma en vue de dessus de l'assemblage de la figure 11. Seul le quart de la couronne cylindrique 23 a été représentée.

On a représenté des galets de guidage 81 et 82 (analogues au galet 65 de la Figure 11) disposés à 90 degrés l'un de l'autre autour de l'axe central commun 41 du sas et qui portent contre la paroi extérieure 61 (en pointillés) du U inversé de la couronne 23. Sur la bissectrice entre les rayons portant les galets de guidage 81 et 82, a été représenté un rayon 84 suivant lequel est aligné l'axe d'une paire de galets de portance 85 reprenant la structure de la figure 12.

Aux figures 14 et 15, on a représenté respectivement une vue de face partielle et une vue en coupe de côté d'un moyen permettant la manoeuvre de la cloison externe 30. La cloison externe 30 présente une zone convexe 81 orientée vers l'extérieur de la cloison (visible à la figure 6 sous la référence 38) et une couronne 86 fixée à la face intérieure de la cloison 30, percée de trous de préhension comme le trou 87. Cet agencement permet ainsi à l'occupant de l'espace central 22 du sas de faire tourner la cloison externe 30 lorsque celle-ci est déverrouillée.

## Revendications

1. Sas d'accès sécurisé permettant la communication entre plusieurs locaux d'un aéronef, le sas d'accès sécurisé étant apte à être installé dans une zone de l'aéronef située entre un premier local et au moins un deuxième local, **caractérisé en ce qu'**il comporte deux cloisons mobiles (30, 31) en forme de portions de cylindres concentriques, chacune des cloisons étant susceptible d'être déplacée, indépendamment l'une de l'autre, autour d'un axe commun (41), de manière à ménager entre elles une seule ouverture (24, 36) qui, selon la position relative des cloisons, permet l'accès à l'un ou l'autre des locaux, les deux cloisons étant aptes à se déplacer sur deux cylindres concentriques de diamètres différents.

2. Sas d'accès sécurisé selon la revendication 1, **caractérisé en ce que** les cloisons sont aptes à effectuer une course de déplacement qui s'étend sur 360°.

3. Sas d'accès sécurisé selon la revendication 1 ou 2, **caractérisé en ce que** les portions de cylindres s'étendent chacune sur un secteur angulaire de plus de 180°.

4. Sas d'accès sécurisé selon l'une des revendications 1 à 3, **caractérisé en ce qu'**il comprend une double paroi fermant l'accès au premier local ou au second local selon la position des cloisons mobiles par rapport aux locaux.

5. Sas d'accès sécurisé selon l'une des revendications 1 à 4, **caractérisé en ce que** les cloisons mobiles sont manipulables par un utilisateur.

6. Sas d'accès sécurisé selon l'une des revendications 1 à 5, **caractérisé en ce que** les cloisons mobiles (30,31) sont reliées à des moyens de support (23, 39) autorisant des mouvements de rotation indépendants de chaque cloison autour de l'axe commun (41).

7. Sas d'accès selon la revendication 6, **caractérisé en ce que** les moyens de support des cloisons mobiles (31, 30) comportent au moins une couronne cylindrique (23, 39) qui est susceptible de tourner autour de l'axe commun (41) du sas relativement à un plancher (42) ou à une voûte de l'aéronef.

8. Sas d'accès selon la revendication 7, **caractérisé en ce que** ladite au moins une couronne cylindrique (23, 39) est mobile en rotation par rapport au plancher (42) et/ou à la voûte par l'intermédiaire de galets de guidage (65) et/ou de portance (76, 77) fixés au plancher ou à la voûte de l'aéronef.

9. Sas d'accès selon l'une des revendications 6 à8, **caractérisé en ce que** l'une des cloisons mobiles (30) est susceptible de se déplacer par rapport à ladite au moins une couronne cylindrique (23, 39) par l'intermédiaire de moyens de guidage (72,73) solidaires de ladite au moins une couronne.

10. Sas d'accès selon l'une quelconque des revendications 1 à 9, **caractérisé en ce qu'**il comporte une première et une seconde cloisons mobiles (30,31) qui coopèrent avec des moyens de verrouillage de leurs mouvements de rotation autour de l'axe commun (41), les moyens de verrouillage étant activés par des moyens de commande assurant qu'une seule cloison est rendue mobile tant que l'ouverture d'accès à l'un des locaux n'est pas complètement dégagée.

11. Sas d'accès selon l'une quelconque des revendications 1 à 10, **caractérisé en ce que** l'une (31) des cloisons mobiles est munie d'une articulation (33) permettant de fixer au sas de manière articulée une plaque (32) et de déployer cette plaque en dehors du sas ou de la rabattre vers le sas.

12. Sas d'accès selon la revendication 11, **caractérisé en ce que** la plaque est une plaque de support (32) qui comprend une assise.

13. Sas d'accès selon la revendication 12, **caractérisé en ce que** l'assise est solidaire de la plaque de support (32) par l'intermédiaire de rails et/ou d'articulations (43, 44) permettant son réglage en hauteur et/ou son inclinaison.

14. Sas d'accès selon l'une quelconque des revendications 2 à 11, **caractérisé en ce que** au moins l'une (31) des cloisons mobiles est dotée d'éléments d'appui (50-54) répartis suivant la hauteur de la cloison de façon à permettre l'accès à une trappe d'évacuation (40) située dans la partie supérieure du sas.

15. Aéronef **caractérisé en ce qu'**il incorpore au moins un sas d'accès sécurisé selon l'une quelconque des revendications 1 à 14.

## Patentansprüche

1. Sicherheits-Luftschleuse, die die Verbindung zwischen mehreren Räumen eines Flugzeugs ermöglicht, wobei die Sicherheits-Luftschleuse geeignet ist, in einer Zone des Flugzeugs angeordnet zu werden, die sich zwischen einem ersten Raum und mindestens einem zweiten Raum befindet, **dadurch gekennzeichnet, dass** sie zwei mobile Trennwände (30, 31) in Form von konzentrischen Zylinderabschnitten umfasst, wobei jede dieser Trennwände geeignet ist, unabhängig von der anderen um eine gemeinsame Achse (41) bewegt zu werden, um zwischen ihnen eine einzige Öffnung (24, 36) auszunehmen, die je nach der relativen Position der Trennwände den Zugang zu dem einen oder dem anderen Raum ermöglicht, wobei die beiden Trennwände geeignet sind, sich auf zwei konzentrischen Zylindern mit unterschiedlichen Durchmessern zu bewegen.

2. Sicherheits-Luftschleuse nach Anspruch 1, **dadurch gekennzeichnet, dass** die Trennwände geeignet sind, einen Bewegungsweg auszuführen, der sich über 360° erstreckt.

3. Sicherheits-Luftschleuse nach Anspruch 1 oder 2, **dadurch gekennzeichnet, dass** sich die Zylinderabschnitte jeweils auf einem Winkelsektor von mehr als 180° erstrecken.

4. Sicherheits-Luftschleuse nach einem der Ansprüche 1 bis 3, **dadurch gekennzeichnet, dass** sie eine Doppelwand umfasst, die den Zugang zum ersten Raum oder zum zweiten Raum je nach der Position der mobilen Trennwände in Bezug auf die Räume verschließt.

5. Sicherheits-Luftschleuse nach einem der Ansprüche 1 bis 4, **dadurch gekennzeichnet, dass** die mobilen Trennwände von einem Benutzer verschiebbar sind.

6. Sicherheits-Luftschleuse nach einem der Ansprüche 1 bis 5, **dadurch gekennzeichnet, dass** die mobilen Trennwände (30, 31) mit Stützmitteln (23, 39) verbunden sind, die unabhängige Drehbewegungen jeder Trennwand um die gemeinsame Achse (41) gestatten.

7. Luftschleuse nach Anspruch 6, **dadurch gekennzeichnet, dass** die Stützmittel der mobilen Trennwände (31, 30) mindestens einen zylindrischen Kranz (23, 39) umfassen, der geeignet ist, sich um die gemeinsame Achse (41) der Schleuse in Bezug auf einen Boden (42) oder eine Decke des Flugzeugs zu drehen.

8. Luftschleuse nach Anspruch 7, **dadurch gekennzeichnet, dass** der mindestens eine zylindrische Kranz (23, 39) in Drehung in Bezug auf den Boden (42) und/oder auf die Decke mit Hilfe von Führungsrollen (65) und/oder eines Trägers (76, 77), die am Boden oder an der Decke des Flugzeugs befestigt sind, beweglich ist.

9. Luftschleuse nach einem der Ansprüche 6 bis 8, **dadurch gekennzeichnet, dass** eine der mobilen Trennwände (30) geeignet ist, sich in Bezug auf den mindestens einen zylindrischen Kranz (23, 39) mit Hilfe von Führungsmitteln (72, 73), die mit dem mindestens einen Kranz verbunden sind, zu verschieben.

10. Luftschleuse nach einem der Ansprüche 1 bis 9, **dadurch gekennzeichnet, dass** sie eine erste und eine zweite mobile Trennwand (30, 31) umfasst, die mit Mitteln zur Verriegelung ihrer Drehbewegungen um die gemeinsame Achse (41) zusammenwirken, wobei die Verriegelungsmittel durch Steuermittel aktiviert werden, die sicherstellen, dass nur eine Trennwand mobilisiert wird, solange die Zugangsöffnung zu einem der Räume nicht vollständig freigegeben ist.

11. Luftschleuse nach einem der Ansprüche 1 bis 10, **dadurch gekennzeichnet, dass** die eine (31) der mobilen Trennwände mit einem Gelenk (33) versehen ist, das es ermöglicht, an der Schleuse eine Platte (32) gelenkig zu montieren und diese Platte von der Schleuse auszuklappen oder sie zu der Schleuse einzuklappen.

12. Luftschleuse nach Anspruch 11, **dadurch gekennzeichnet, dass** die Platte eine Stützplatte (32) ist, die einen Sitz umfasst.

13. Luftschleuse nach Anspruch 12, **dadurch gekennzeichnet, dass** der Sitz mit der Stützplatte (32) mit Hilfe von Schienen und/oder Gelenken (43, 44) verbunden ist, die seine Höhen- und/oder Neigungseinstellung ermöglichen.

14. Luftschleuse nach einem der Ansprüche 2 bis 11, **dadurch gekennzeichnet, dass** mindestens eine der mobilen Trennwände (31) mit Auflageelementen (50-54) versehen ist, die entlang der Höhe der Trennwand verteilt sind, um den Zugang zu einer Notluke (40) zu ermöglichen, die sich im oberen Teil der Schleuse befindet.

15. Flugzeug, **dadurch gekennzeichnet, dass** es mindestens eine Sicherheits-Luftschleuse nach einem der Ansprüche 1 bis 14 umfasst.

## Claims

1. Secured vestibule allowing communication between several aircraft compartments, the secured vestibule being capable of being installed in an area of the aircraft situated between a first compartment and at least a second compartment, **characterised in that** it comprises two mobile partitions (30, 31) in the form of concentric portions of cylinders, each of the partitions being capable of independent movement about a common axis (41), so as to form between them a single opening (24, 36) which, depending on the relative position of the partitions, gives access to one or other of the compartments, the two partitions being capable of moving on two concentric cylinders having different diameters.

2. Secured vestibule according to claim 1, **characterised in that** the partitions are capable of describing a range of movement extending through 360°.

3. Secured vestibule according to claim 1 or 2, **characterised in that** the portions of cylinders each extend through an angular sector of more than 180°.

4. Secured vestibule according to one of claims 1 to 3, **characterised in that** it comprises a double wall closing off access to the first compartment or the second compartment depending on the position of the mobile partitions with respect to the compartments.

5. Secured vestibule according to one of claims 1 to 4, **characterised in that** the mobile partitions can be operated by a user.

6. Secured vestibule according to one of claims 1 to 5, **characterised in that** the mobile partitions (30, 31) are linked to support means (23, 39) permitting independent rotational movements of each partition about the common axis (41).

7. Vestibule according to claim 6, **characterised in that** the support means of the mobile partitions (31, 30) comprise at least one cylindrical ring (23, 39) that is capable of turning about the common axis (41) of the vestibule with respect to a floor (42) or a ceiling of the aircraft.

8. Vestibule according to claim 7, **characterised in that** said at least one cylindrical ring (23, 39) is mobile in rotation with respect to the floor (42) and/or to the ceiling using guide (65) and/or bearing (76, 77) rollers fixed to the floor or the ceiling of the aircraft.

9. Vestibule according to one of claims 6 to 8, **characterised in that** one of the mobile partitions (30) is capable of moving with respect to said at least one cylindrical ring (23, 39) using guide means (72, 73) joined together with said at least one ring.

10. Vestibule according to any one of claims 1 to 9, **characterised in that** it comprises first and second mobile partitions (30, 31) that engage with means for locking their rotational movements about the common axis (41), the locking means being activated by control means ensuring that only a single partition is rendered mobile until the access opening to one of the compartments is completely clear.

11. Vestibule according to any one of claims 1 to 10, **characterised in that** one (31) of the mobile partitions is equipped with an articulation (33) making it possible to fix a plate (32) in an articulated manner to the vestibule and to deploy said plate outside the vestibule or fold it back towards the vestibule.

12. Vestibule according to claim 11, **characterised in that** the plate is a support plate (32) that comprises a seat.

13. Vestibule according to claim 12, **characterised in that** the seat is joined together with the support plate (32) using tracks and/or articulations (43, 44) allowing its height and/or tilt to be adjusted.

14. Vestibule according to any one of claims 2 to 11, **characterised in that** at least one (31) of the mobile partitions is provided with support elements (50-54) distributed heightwise over the partition in order to allow access to an escape hatch (40) situated in the upper part of the vestibule.

15. Aircraft **characterised in that** it incorporates at least one secured vestibule according to any one of claims 1 to 14.
